# EUROPÄISCHE PATENTANMELDUNG

(11) **EP 2 878 736 A1**
(43) Veröffentlichungstag der Anmeldung: **03.06.2015**
(21) Anmeldenummer: 14003973.6
(22) Anmeldetag: 26.11.2014
(51) Int. Cl.: E03B 1/04, E03B 3/03

(54) **Regenwasserwerk**

(30) Priorität: 27.11.2013 DE 102013019743
(71) Anmelder: WISY AG Haustechniksysteme, Filtertechnik, 63699 Kefenrod (DE)
(72) Erfinder: Denk, Arnold, 63688 Gedern (DE); Maurer, Jan, 37218 Witzenhausen (DE)
(74) Vertreter: Hebing, Norbert

(57) **Zusammenfassung**

Es wird ein Regenwasserwerk beschrieben, das mit einer normalsaugenden Pumpe (4) arbeitet. Die Saugleitung (2) zum Regenwasserspeicher (1) ist über eine Nachfüllleitung (7) mit einem Trinkwasserspeicher (8) verbunden, wobei am Ende der Nachfüllleitung (7) ein Rückschlagventils (10) angeordnet ist, das zum Trinkwasserspeicher (8) hin öffnet. Ein weiteres Rückschlagventil (3) ist am Ende der Saugleitung (2) angebracht, das zum Regenwasserspeicher hin sperrt.

Es hat sich gezeigt, dass Luft in der Nachfüllleitung über das Rückschlagventil (10) in den Trinkwasserspeicher (8) gelangt und im gleichen Maße Wasser aus dem Trinkwasserspeicher (8) in die Saugleitung (2) einfließt, bis diese gefüllt ist. Die normalsaugende Pumpe (4) kann daher, nahezu unmittelbar nachdem sie eingeschaltet wurde, ihren Wasserförderungsbetrieb aufnehmen.

## Beschreibung

Die Erfindung bezieht sich auf ein Regenwasserwerk mit einem Regenwasserspeicher, einen mit aus einem öffentlichen Netzwerk gespeisten Trinkwasserspeicher, mit einer externen Pumpe, die über eine Saugleitung mit dem Regenwasserspeicher verbunden ist, wobei an dem Ende der Saugleitung, die in den Regenwasserspeicher eintaucht, ein Rückschlagventil geschaltet ist, das zum Regenwasserspeicher hin sperrt, wobei die externe Pumpe eine normalsaugende Pumpe ist, die Saugleitung über eine Nachfüllleitung mit dem Trinkwasserspeicher in Verbindung steht, die Nachfüllleitung oberhalb des projektierten maximalen Füllstandes des Regenwasserspeichers von der Saugleitung abzweigt und der Trinkwasserspeicher oberhalb der Abzweigung liegt, und wobei in der Nachfüllleitung ein Sperrventil eingesetzt ist.

Ein derartiges Regenwerk ist in der DE 101 33 468 A1 beschrieben, die ebenfalls ein Regenwasserwerk mit einer nicht selbstansaugenden Pumpe zeigt, wobei ebenfalls das Problem besteht, dass die Saugleitung zum Trinkwasserspeicher entlüftet werden muss.

Dazu ist in der Saugleitung ein 3/2-Wege-Ventil 16 vorgesehen, das die Saugseite der Pumpe entweder mit dem Trinkwasserspeicher oder mit einem Regenwasserspeicher verbindet.

Betätigt wird dieses Ventil durch den Druck an der Druckseite der Pumpe.

Der dadurch bewirkte Entlüftungsvorgang ist in Absatz 40 beschrieben. Es kommt zu einem dauernden Umschalten des Ventils 16, bis die zum Regenwasserspeicher führende Leitung 19 entlüftet und mit Wasser befüllt ist.

Um Wasserressourcen zu schonen, sind viele Haushalte dazu übergegangen, Zisternen oder auch so genannte Regenwasserspeicher anzulegen, die das von einem Dach ablaufende Wasser sammeln. Dieses Wasser kann als so genanntes Grauwasser für Toilettenspülungen, Waschmaschinen und dergleichen genutzt werden.

Um an das Wasser des Regenwasserspeichers zu gelangen, der häufig unter der Erdoberfläche angeordnet ist, wird eine Pumpe eingesetzt. Zum einen können so genannte Tauchpumpen genutzt werden, die am Boden der Zisterne angeordnet sind. Da an deren Saugseite stets das Wasser in dem Regenwasserspeicher anliegt, handelt es sich hier um nicht selbstansaugende Pumpen.

Es sind aber auch so genannte externe Pumpen im Einsatz, die außerhalb des Regenwasserspeichers angeordnet sind und über eine Saugleitung, die kurz oberhalb des Bodens des Regenwasserspeichers endet, an den Regenwasserspeicher angeschlossen sind. Da die Saugleitung nur bis zum jeweiligen Füllstand des Regenwasserspeichers mit Wasser gefüllt ist, benutzt man hier so genannte selbstansaugende Pumpen, die in der Lage sind, aus der Saugleitung die Luft zu entfernen, bevor der eigentliche Wasseransaugvorgang beginnen kann. Eine selbstansaugende Pumpe ist somit in der Lage, die Saugleitung zu entlüften, d. h. die Luft daraus zu entfernen. Bei einer solchen selbstansaugenden Pumpe kann es sich z. B. um eine Seitenkanalpumpe handeln.

Derartige Pumpen sind allerdings recht aufwändig und teuer, so dass der Bedarf besteht, ein Regenwasserwerk zu schaffen, das auf derartige Pumpen verzichten kann.

In der DE 101 33 468 A1 wurde daher schon vorgeschlagen, eine nicht selbstansaugende Pumpe zu verwenden, wobei zur Entlüftung der Saugleitung in dieser ein 3/2-Wege-Schaltventil als Sperrventil vorgesehen ist, das die Saugseite der Pumpe entweder mit dem Trinkwasserspeicher oder mit einem Regenwasserspeicher verbindet. Betätigt wird dieses Schaltventil durch den Druck an der Druckseite der Pumpe, wozu eine gesonderte Leitung verlegt werden muss.

Mit einem derart angeordneten Schaltventil lässt sich zwar die Saugleitung entlüften. Auf Grund der Verschaltung des Schaltventils kommt es dabei aber zu einem dauernden Umschalten des Ventils. Der Umschaltvorgang wiederholt sich solange, bis die zum Regenwasserspeicher führende Leitung entlüftet und mit Wasser befüllt ist.

Die Erfindung beruht daher auf dem Problem, die Schaltung zu vereinfachen und das Sperrventil belastende, sich wiederholende Schaltvorgänge zu vermeiden.

Zur Lösung des Problems sieht die Erfindung vor, dass das Sperrventil ein um ein zum Trinkwasserspeicher hin öffnendes Rückschlagventil ist, das keine äußere Ansteuerung aufweist.

Wird nun die normalsaugende Pumpe eingeschaltet, so wird gleichzeitig das Sperrventil geöffnet, wodurch sich die Nachfüllleitung und die Saugleitung mit dem Wasser aus dem Trinkwasserspeicher füllt. Am Sauganschluss der Pumpe steht somit sofort Wasser an, das gefördert werden kann, ohne dass zuvor die Saugleitung entlüftet werden müsste.

Mit Einschalten der Pumpe setzt somit sofort die Wasserförderung ein.

Bei der Erprobung der Erfindung hat es sich gezeigt, dass mit Einschalten der Pumpe Luft aus der Saugleitung über dieses Rückschlagventil in den Trinkwasserspeicher gelangt und dieser dabei in entsprechendem Maße Wasser in die Nachfüllleitung und damit in die Saugleitung abgibt. Dies nimmt zwar auch einige Zeit in Anspruch, die aber wesentlich kürzer ist als der Entlüftungsvorgang bei einer selbstansaugenden Pumpe, denn beim Einsatz einer selbstansaugenden Pumpe wird die Luft durch die Pumpe hindurch über den Verbraucher abgeführt. Im Falle der vorliegenden Erfindung wird die Luft jedoch schon vor der Pumpe abgetrennt und aus dem System entfernt.

Da sich am Ende der Saugleitung im Regenwasserspeicher ebenfalls ein Rückschlagventil befindet, kann das in die Saugleitung über die Nachfüllleitung einströmende Wasser nicht in den Regenwasserspeicher abfließen. Vielmehr sammelt sich das Wasser in der Saugleitung.

Im Folgenden soll anhand eines Ausführungsbeispiels die Erfindung anhand einer Figur erläutert werden:
An der tiefsten Stelle des Regenwasserwerkes befindet sich ein Regenwasserspeicher l, der über eine Saugleitung 2, an deren unterem Ende sich ein zum Regenwasserspeicher schließendes Rückschlagventil 3 befindet, mit einer normalsaugenden Pumpe 4 verbunden ist. Unmittelbar vor dem Saugstutzen 5 der Pumpe 4 befindet sich ein T-Stück 6, das über eine Nachfüllleitung 7 mit einem Trinkwasserspeicher 8 verbunden ist. Dieser Speicher verfügt über einen hier nicht dargestellten Füllstandsmesser, so dass er ggf. aus dem Trinkwassernetz 9 aufgefüllt werden kann. Am Ende der Nachfüllleitung 7 befindet sich ein Rückschlagventil 10, das zum Trinkwasserspeicher 8 hin öffnet.

Die Pumpe 4 ist außerhalb und vorzugsweise oberhalb des Regenwasserspeichers 1 angeordnet. Vor allem die Abzweigung 6 befindet sich oberhalb des projektierten maximalen Füllstandes des Regenwasserspeichers. Der Trinkwasserspeicher befindet sich nochmals oberhalb der Abzweigung.

Das Rückschlagventil 10 im Trinkwasserspeicher 8 verhindert, dass die Pumpe 4 Wasser aus diesem ansaugt. Ist allerdings die Nachfüllleitung 7 mit Luft gefüllt, entweicht diese über das Rückschlagventil 10 in den Trinkwasserspeicher 8. In dem Maße, wie Luft über das Rückschlagventil 10 in den Trinkwasserspeicher 8 entweicht, strömt Wasser aus dem Trinkwasserspeicher 8 in die Nachfüllleitung 7 und in die Saugleitung 2, so dass diese mit Wasser gefüllt wird. Dies wiederum hat zur Folge, dass an dem Saugstutzen der Pumpe 4 Wasser ansteht. Es kann daher eine normalsaugende Pumpe zum Einsatz kommen, da diese die Saugleitung nicht zu entlüften braucht.

### Bezugszeichenliste

- 1: Regenwasserspeicher
- 2: Saugleitung
- 3: Rückschlagventil
- 4: Pumpe
- 5: Saugstutzen

- 6: T-Stück
- 7: Nachfüllleitung
- 8: Trinkwasserspeicher
- 9: Trinkwassernetz
- 10: Rückschlagventil

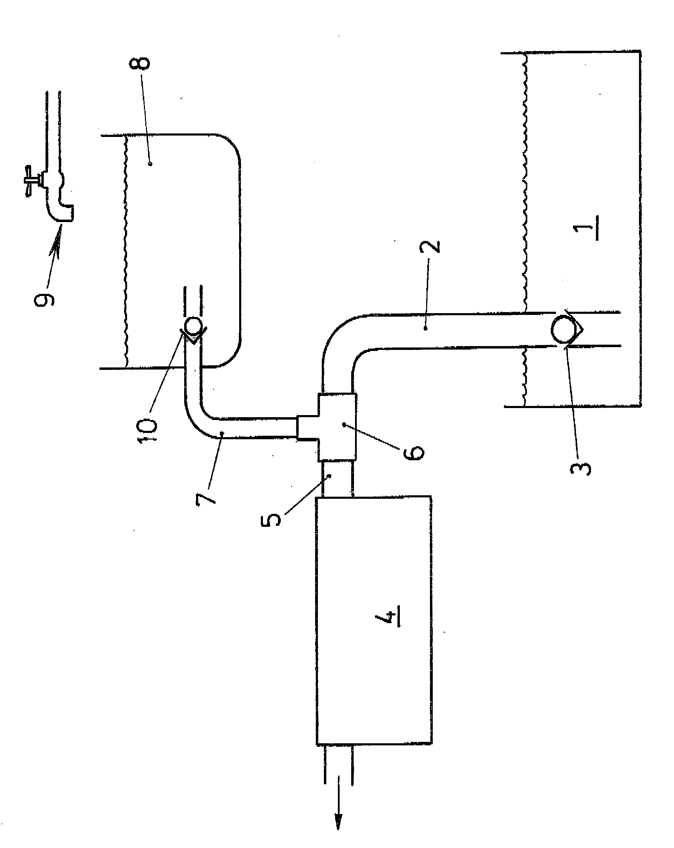

## Patentansprüche

1. Regenwasserwerk mit einem Regenwasserspeicher (1), einen mit aus einem öffentlichen Netzwerk gespeisten Trinkwasserspeicher (8), mit einer externen Pumpe, die über eine Saugleitung (2) mit dem Regenwasserspeicher (1) verbunden ist, wobei an dem Ende der Saugleitung (2), die in den Regenwasserspeicher (1) eintaucht, ein Rückschlagventil (3) geschaltet ist, das zum Regenwasserspeicher (1) hin sperrt, wobei die externe Pumpe eine normalsaugende Pumpe (4) ist, die Saugleitung (2) über eine Nachfüllleitung (7) mit dem Trinkwasserspeicher (8) in Verbindung steht, die Nachfüllleitung (7) oberhalb des projektierten maximalen Füllstandes des Regenwasserspeichers (1) von der Saugleitung (2) abzweigt und der Trinkwasserspeicher (8) oberhalb der Abzweigung liegt, und wobei in der Nachfüllleitung (7) ein Sperrventil (10) eingesetzt ist, **dadurch gekennzeichnet, dass** das Sperrventil ein um ein zum Trinkwasserspeicher (8) hin öffnendes Rückschlagventil (10) ist, das keine äußere Ansteuerung aufweist.
